# EUROPEAN PATENT SPECIFICATION

(11) **EP 2 626 550 B1**
(45) Date of publication and mention of the grant of the patent: **27.04.2016**
(21) Application number: 12154930.7
(22) Date of filing: 10.02.2012
(51) Int. Cl.: F03D 7/02

(54) **Improved noise reduction control for wind turbines**
Verbesserte Rauschunterdrückungssteuerung für Windturbinen
Contrôle amélioré de la réduction du bruit pour éoliennes

(43) Date of publication of application: 14.08.2013
(73) Proprietor: Siemens Aktiengesellschaft, 80333 München (DE)
(72) Inventor: Nielsen, Kaj Skov, Issaquah WA, 98027 (US)

(56) References cited:
- EP-A2- 2 075 462
- EP-A2- 2 075 465
- EP-A2- 2 202 406
- EP-A2- 2 306 004
- WO-A2-2008/145126
- WO-A2-2010/037387

## Description

As more and more wind power plants are installed, wind parks move closer to densely populated areas. Accordingly, the impact of the acoustic emissions on nearby residences caused by such wind power plants will become an increasingly important problem. Implementation of closed-loop noise control functions is difficult because the sound level will not only be impacted by noise generated by the wind turbine but also by any other sound sources in the proximity of the installation. Hence, restriction of the sound emission based on measurements of the noise level or the noise spectrum will be impractical. Thus, known solutions typically involve defining a plurality of modes of operation where a compromise between optimal power generation performance and acceptable noise level have been reached. In other words, the power output of the wind turbine may be lowered for the sake of reducing the emission of noise. The reduced cost-effectiveness of the wind turbines makes such solutions undesirable.

WO 2010/037387 A2 relates to noise control of wind turbines and mentions the role of wind shear in stall generation.

EP 2 075 462 A2 discloses a wind turbine having a blade pitch control system that takes the rotational position of the rotor blades into account for improved stall monitoring and control.

EP 2 075 465 A2 is closely related to the aforementioned EP 2 075 462 A2 and describes correlating a measured sound level to a rotor position which is determined using a rotational trigger.

Accordingly a first aspect of the invention provides a method of controlling noise emission from a wind turbine comprising at least one rotor blade. The inventive method comprises steps of:
Providing wind shear data comprising wind shear values as a function of height over ground;

Determining an expected noise emission based on the wind shear data;

Controlling the wind turbine to reduce noise emission from the wind turbine in accordance with the expected noise emission; and

Measuring a blade load of the at least one rotor blade as a function of the azimuth of the at least one rotor blade, wherein the provided wind shear data is determined based on the measured blade load.

The invention is based on the understanding that wind speed varies largely with height over ground. Typically wind speed measurements are only carried out at a single place of the wind turbine, usually by an anemometer arranged at the top of the nacelle of the wind turbine. This means that the controller of the wind turbine was not able to take the phenomenon of wind shear into account when selecting a combination of rotor blade pitch and rotational speed of the rotor that is expected to lower noise emission for a given wind speed. The invention therefore uses wind shear data comprising an information about wind speeds and wind directions as a function of height over ground to predict the noise emission more precisely. In the most simple case the wind shear data can be predefined and fixed.

A control setting suitable for reducing noise emission for e.g. normal wind conditions may prove to yield less noise reduction during high wind shear conditions. Taking wind shear data that quantifies the degree of wind shear into account can also lead to modified control settings (e.g. rotor speed and/or blade pitch) that vary with the wind shear conditions.

A preferred embodiment of the inventive method comprises determining an azimuth of the at least one rotor blade. Furthermore, the expected noise emission is determined in accordance with the determined azimuth and the wind turbine is controlled in accordance with the expected noise emission and the determined azimuth.

The phenomenon of wind shear poses another problem in that for increasing rotor diameters the differences in wind speed at the top and the bottom of the rotor become large and result in periodic variations of the emitted noise level. Such variations can be perceived as being even more disturbing than a continuously high noise level. In addition the inventors have recognised that the different wind speeds and directions found depending on the current rotor azimuth mean that the optimal settings for the wind turbine as a whole and the rotor blade in particular vary during a revolution of the rotor or rotor blade. Accordingly, better results can be achieved by controlling the wind turbine and the at least one rotor blade depending on the current azimuth of the rotor or rotor blade. This will often result in periodic settings having a period which depends on the rotational speed of the rotor.

Preferably the method further comprises measuring at least one environmental parameter. The wind shear data will then be determined in accordance with the measured environmental parameter. The environmental parameter can be used to select suitable wind shear data from a plurality of predefined wind shear datasets or it can be used in a mathematical model of the wind shear to derive information on the current wind shear and to compute current wind shear data. Measuring the environmental parameter makes the control more flexible and yields a better performance for varying environmental conditions.

For example, measuring the environmental parameter may comprise measuring at least one of a temperature, a wind speed, a wind direction, an atmospheric pressure, an intensity of sunshine and an air humidity. The more measurands and measurements are included, the more precisely the wind shear data can be determined and the more precisely can the noise emission be predicted.

Measuring the environmental parameter preferably comprises measuring at a plurality of heights between ground level and a maximum height of the wind turbine (i.e. the maximum height of the rotor of the wind turbine). In some such embodiments the wind shear data may be derived directly form the measurements at the plurality of heights. The measurements can be carried out using a LIDAR system (Light Detection and Ranging), a SODAR system (Sonic Detecting and Ranging), another suitable atmospheric measurement device or simply by placing a plurality of measurement instruments such as anemometers, barometers, thermometers and the like on a mast or on the tower of the wind turbine. Especially in the latter case it may suffice for some cases to only carry out measurements at the height of the nacelle and below and to compute wind shear data for the heights above the nacelle based on these measurements. This has an advantage in that additional support structures for the measurement devices are unnecessary.

The method may further comprise steps of determining a wind speed and an actual power output of the wind turbine and comparing the actual power output with an expected power output for the determined wind speed. In such embodiments of the invention the provided wind shear data will be determined based on a result of the comparison of the actual power output and the expected power output. If the actual power output is lower than expected for the given wind speed, it may be concluded that the wind exposes less of a laminar flow and that there is increased wind shear. Accordingly a noise level will be higher and the power generation should be throttled.

Preferably one of the actual power output or the expected power output is compensated in accordance with the measured environmental parameter prior to comparing the actual power output to the expected power output. This avoids the risk of misinterpreting the result of the comparison because of a contamination of the rotor blades by wake, dust, snow, insects or other detrimental factors that may temporarily cause a loss of turbine performance. At least some such influences can be identified by means of the measurement of the environmental parameter.

According to the invention the method further comprises measuring a blade load of the at least one rotor blade as a function of the azimuth of the at least one rotor blade. The provided wind shear data will be determined based on the measured blade load. The forces applied to the rotor blade vary with the wind speed. Accordingly measuring the blade load can give information about the wind speed at the present azimuth or height of the rotor blade. This is especially useful for determining wind speeds at heights greater than that of the nacelle below which the wind speed can be measured easily by placing anemometers on the tower of the wind turbine (see above). Even though the wind applies a specific force to every section of the rotor blade which sum up to yield a total blade load, the wind speed can be determined for different heights with sufficient precision by observing the variation of blade load as a function of azimuth of the rotor blade.

The method may further comprise determining at least one of a time of day and a day of the week. Then controlling the wind turbine to reduce noise emission from the wind turbine may be carried out in accordance with the determined time of day and/or day of the week. The advantage of this is twofold: firstly, the acceptable noise level may be set depending on the current time, e.g., the noise level may be lower during week-ends and outside working hours. Secondly, it may be observed that wind shear depends on the time of day. For example it may be found that wind shear is often higher in the time towards sunrise and the wind turbine can be controlled taking this phenomenon into consideration.

The method may also further comprise determining a direction of wind. In this case the step of controlling the wind turbine to reduce noise emission from the wind turbine is carried out in accordance with the determined direction of wind. For example, the wind turbine may be controlled to produce less noise when the wind direction is such that the noise will be carried by the wind to nearby settlements and to produce more noise if the wind direction is such that the noise will be carried away from nearby settlements.

Generally controlling the wind turbine may comprise setting at least one of rotor speed and blade pitch of the at least one rotor blade in accordance with the expected noise emission. Rotor speed and blade pitch both have a direct impact on power generation as well as on the emitted noise level. The blade pitch may be set for all rotor blades or for each rotor blade individually. A controller may output pitch positions, rotations-per-minute targets, dB noise limits or a combination of these which result in changes of rotor speed and blade pitch. In the case of a wind park a central controller could output such control values individually for each wind turbine and - where appropriate - for each rotor blade.

Controlling the wind turbine to reduce noise emission may be conditional on the expected noise emission being greater than a threshold noise emission. Wear and tear of the wind turbine will be lower if the number of control actions like blade pitching is kept to a minimum. Accordingly it is advantageous to restrict the controlling to reduce noise emission to a necessary minimum. If the expected noise emission remains below the threshold noise emission, no specific controlling action need to be taken.

The threshold noise emission may be a function of at least one of time of day and day of the week. As mentioned above, the controlling of the noise emission may take week-ends and common leasure times into account and reduce the noise emission even more during times when the noise emission will be perceived as even more disturbing.

A second aspect of the invention provides a computer readable storage medium comprising program code which, when executed on a controller of a wind turbine or of a wind park, carries out the method of the invention.

A third inventive aspect is directed at a wind turbine comprising at least one rotor blade and a control unit adapted to carry out the inventive method.

These and other features, aspects and advantages of the invention will become better understood with reference to the following description and drawings.

The invention will now be described in more detail, by way of example only, with reference to the accompanying drawings in which:
Fig. 1 shows a first diagram illustrating wind speed v_{w} as a function of height h;
Figs. 2A, 2B and 2C show second diagrams illustrating wind speed v_{w} as a function of height h wherein the wind speed is split into vector components v_{wx}, v_{wy}, and v_{wz};
Fig. 3 shows a wind turbine according to the invention.

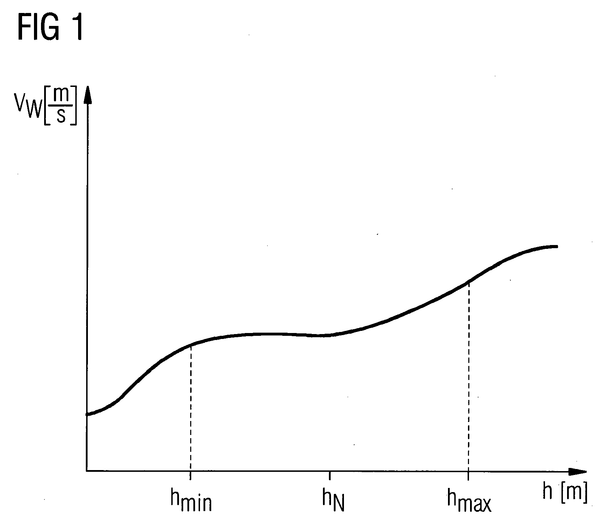

Fig. 1 shows a first diagram illustrating wind speed v_{w} as a function of height h. The curve of the wind speed is of merely exemplary nature and only related to real examples in that the wind speed is typically lower at lower heights over ground than at greater heights.

In the diagram hN denominates the height of the wind turbine's nacelle while hₘᵢₙ and hₘₐₓ represent the minimum and maximum heights of the tips of the rotor blades. As can be seen from the diagram, the forces applied to the rotor blades will vary largely with rotor azimuth because of the differences in wind speed at different heights. The different wind speeds also mean that noise emission will vary depending on rotor azimuth. If a rotor blade is pitched for low noise emission at one rotor azimuth, the selected pitch may be unsuitable for a different rotor azimuth and cause production of an unnecessary amount of noise for the second rotor azimuth. This is because the wind speed varies largely as does the difference between the respective wind speeds at hₘᵢₙ and hₘₐₓ. Accordingly, it is not feasible to provide a predetermined optimum setting for the wind turbine with regard to noise emission only considering a single wind speed value and ignoring wind shear. For this reason embodiments of the invention take wind shear into account. In some embodiments of the invention the same settings are applied to all rotor blades of the wind turbine in order to provide a compromise which generates minimum noise for a fixed setting for all rotor blades. In preferred embodiments of the invention the rotor azimuth is considered along with the wind shear data. In this case the blade pitch of each rotor blade may be varied cyclically as a function of the azimuth of the rotor blade.

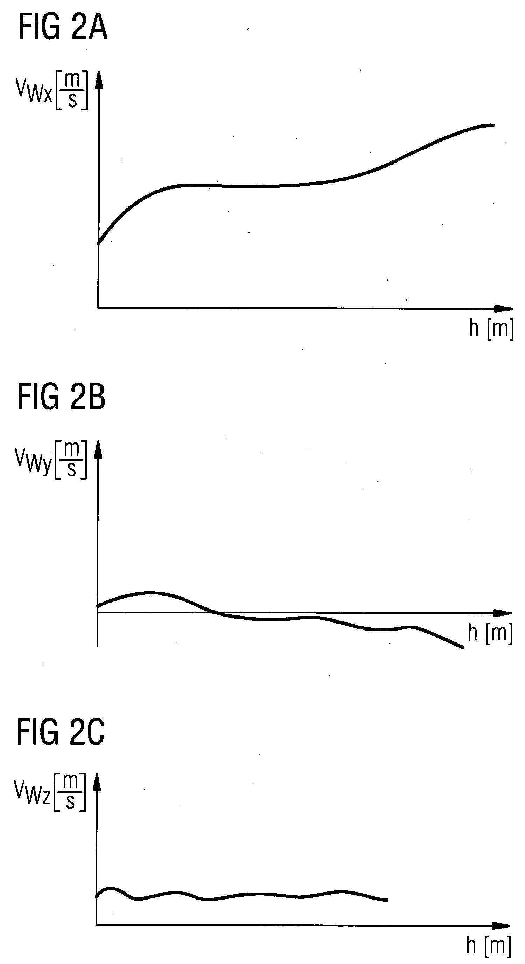

Figs. 2A, 2B and 2C show second diagrams illustrating wind speed v_{w} as a function of height h wherein the wind speed is split into vector components v_{wx}, v_{wy}, and v_{wz}. In Fig. 1 only an amount of wind speed was shown and it was silently assumed that wind generally moves in parallel to the ground. However, this is not the case and wind shear can be more accurately described using vectors. Fig. 2A shows the wind speed measured in a direction parallel to the normal to the rotor plane. As can be seen the curve largely corresponds to that of Fig. 1 because the absolute value of a vector is dominated by its largest component which in the case of wind is usually parallel to the normal of the rotor plane. However, for the purpose of noise reduction the other components of the wind speed and the differences therein should be considered in order to yield better results. The second component of the wind speed shown in Fig. 2B is different from zero whenever the nacelle is not rotated along the tower to face the wind. Commonly control of the wind turbine will always try to minimise this component by rotating the nacelle of the wind turbine accordingly. However, this can only be done at a limited speed. Accordingly expected noise emission may be found to be higher if the direction of wind changes faster than the nacelle can follow. The third component shown in Fig. 2C describes the wind speed parallel to the vertical axis, e.g. the tower axis. This component will generally be rather low but can also contribute to noise generation. It will be found that rising temperatures and falling air pressures will often give rise to a wind speed component away from the ground.

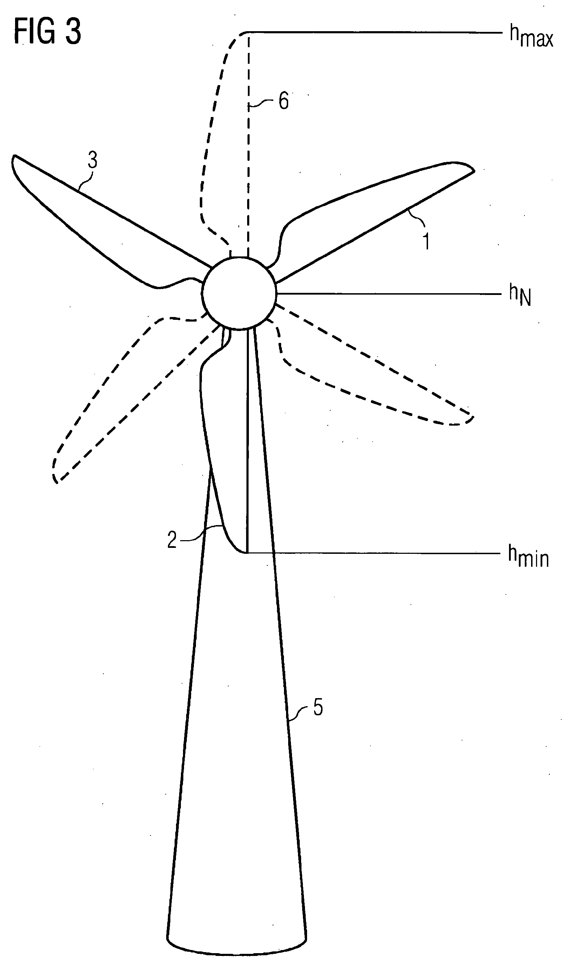

Fig. 3 shows a wind turbine according to the invention. The wind turbine comprises rotor blades 1, 2, and 3 revolving around a nacelle 4 located at the top of a tower 5. Heights h_{N}, hₘᵢₙ, and hₘₐₓ are indicated in the figure. Considering the wind speeds illustrated in the preceding figures that vary as a function of height, it is clear that the forces applied to the individual rotor blades as well as to the rotor as a whole will be different when the rotor is in a second position 6 (dashed line). The direction of wind will vary in addition to the amount of wind speed which leads to the conclusion that the wind shear should be taken into account in order to reduce noise emission.

While the invention has been described by referring to preferred embodiments and illustrations thereof, it is to be understood that the invention is not limited to the specific form of the embodiments shown and described herein, and that many changes and modifications may be made thereto within the scope of the appended claims by one of ordinary skill in the art.

## Claims

1. A method of controlling noise emission from a wind turbine comprising at least one rotor blade (1, 2, 3), the method comprising:
Providing wind shear data comprising wind shear values as a function of height over ground;
Determining an expected noise emission based on the wind shear data; and
Controlling the wind turbine to reduce noise emission from the wind turbine in accordance with the expected noise emission,
**characterised in that** the method further comprises measuring a blade load of the at least one rotor blade (1, 2, 3) as a function of the azimuth of the at least one rotor blade (1, 2, 3), wherein the provided wind shear data is determined based on the measured blade load.

2. The method of the preceding claim, wherein the expected noise emission is determined in accordance with the azimuth of the at least one rotor blade (1, 2, 3) and wherein controlling the wind turbine to reduce noise emission from the wind turbine is carried out in accordance with the expected noise emission and the azimuth of the at least one rotor blade (1, 2, 3).

3. The method of one of the preceding claims, further comprising measuring at least one environmental parameter and wherein the wind shear data is determined in accordance with the measured environmental parameter.

4. The method of the preceding claim, wherein measuring the environmental parameter comprises measuring at least one of a temperature, a wind speed, a wind direction, an atmospheric pressure, an intensity of sunshine and an air humidity.

5. The method of the preceding claim, wherein measuring the environmental parameter comprises measuring at a plurality of heights between ground level and a maximum height of the wind turbine.

6. The method of one of the preceding claims, further comprising determining a wind speed and an actual power output of the wind turbine and comparing the actual power output with an expected power output for the determined wind speed, wherein the provided wind shear data is further determined based on a result of the comparison of the actual power output and the expected power output.

7. The method of the preceding claim and of one of the claims 3 through 5, wherein one of the actual power output or the expected power output is compensated in accordance with the measured environmental parameter prior to comparing the actual power output to the expected power output.

8. The method of one the preceding claims, further comprising determining at least one of a time of day and a day of the week, wherein controlling the wind turbine to reduce noise emission from the wind turbine is carried out in accordance with the determined time of day and/or day of the week.

9. The method of one of the preceding claims, further comprising determining a direction of wind, wherein controlling the wind turbine to reduce noise emission from the wind turbine is carried out in further accordance with the determined direction of wind.

10. The method of one of the preceding claims, wherein controlling the wind turbine comprises setting at least one of rotor speed and blade pitch of the at least one rotor blade (1, 2, 3) in accordance with the expected noise emission.

11. The method of one of the preceding claims, wherein controlling the wind turbine to reduce noise emission is conditional on the expected noise emission being greater than a threshold noise emission.

12. The method of the preceding claim, wherein the threshold noise emission is a function of at least one of time of day and day of the week.

13. A computer readable storage medium comprising program code which, when executed on a controller of a wind turbine or of a wind park, carries out the method of one of the preceding claims.

14. A wind turbine comprising at least one rotor blade (1, 2, 3) and a control unit adapted to carry out the method of one of the claims 1 through 12.

## Patentansprüche

1. Verfahren zum Steuern der Schallemission einer Windenergieanlage mit mindestens einem Rotorblatt (1, 2, 3), wobei das Verfahren Folgendes umfasst:
Bereitstellen von Windscherungsdaten mit Windscherungswerten in Abhängigkeit von der Höhe über dem Boden,
Bestimmen einer zu erwartenden Schallemission auf der Grundlage der Windscherungsdaten und
Steuern der Windenergieanlage zum Reduzieren der Schallemission der Windenergieanlage gemäß der zu erwartenden Schallemission,
**dadurch gekennzeichnet, dass** das Verfahren ferner das Messen einer Blattbelastung des mindestens einen Rotorblatts (1, 2, 3) in Abhängigkeit vom Azimut des mindestens einen Rotorblatts (1, 2, 3) umfasst, wobei die bereitgestellten Windscherungsdaten auf der Grundlage der gemessenen Blattbelastung bestimmt werden.

2. Verfahren nach dem vorhergehenden Anspruch, bei dem die zu erwartende Schallemission entsprechend dem Azimut des mindestens einen Rotorblatts (1, 2, 3) bestimmt und das Steuern der Windenergieanlage zum Reduzieren der Schallemission der Windenergieanlage entsprechend der zu erwartenden Schallemission und dem Azimut des mindestens einen Rotorblatts (1, 2, 3) durchgeführt wird.

3. Verfahren nach einem der vorhergehenden Ansprüche, das ferner das Messen mindestens eines Umweltparameters umfasst und bei dem die Windscherungsdaten entsprechend dem gemessenen Umweltparameter bestimmt werden.

4. Verfahren nach dem vorhergehenden Anspruch, bei dem das Messen des Umweltparameters das Messen einer Temperatur, einer Windgeschwindigkeit, einer Windrichtung, eines Luftdrucks, einer Intensität der Sonnenstrahlung oder/ und einer Luftfeuchtigkeit umfasst.

5. Verfahren nach dem vorhergehenden Anspruch, bei dem das Messen des Umweltparameters das Messen in mehreren Höhen zwischen Bodenhöhe und einer maximalen Höhe der Windenergieanlage umfasst.

6. Verfahren nach einem der vorhergehenden Ansprüche, das ferner das Bestimmen einer Windgeschwindigkeit und einer tatsächlichen Ausgangsleistung der Windenergieanlage und das Vergleichen der tatsächlichen Ausgangsleistung mit einer erwarteten Ausgangsleistung für die bestimmte Windgeschwindigkeit umfasst, wobei die bereitgestellten Windscherungsdaten ferner auf der Grundlage eines Ergebnisses des Vergleichs der tatsächlichen Ausgangsleistung mit der erwarteten Ausgangsleistung bestimmt werden.

7. Verfahren nach dem vorhergehenden Anspruch und einem der Ansprüche 3 bis 5, bei dem die tatsächliche Ausgangsleistung oder die erwartete Ausgangsleistung entsprechend dem gemessenen Umweltparameter kompensiert wird, bevor die tatsächliche Ausgangsleistung mit der erwarteten Ausgangsleistung verglichen wird.

8. Verfahren nach einem der vorhergehenden Ansprüche, das ferner das Bestimmen einer Tageszeit oder/ und eines Wochentages umfasst, wobei das Steuern der Windenergieanlage zum Reduzieren der Schallemission der Windenergieanlage entsprechend der bestimmten Tageszeit und/ oder dem bestimmten Wochentag durchgeführt wird.

9. Verfahren nach einem der vorhergehenden Ansprüche, das ferner das Bestimmen einer Windrichtung umfasst, wobei das Steuern der Windenergieanlage zum Reduzieren der Schallemission der Windenergieanlage ferner entsprechend der bestimmten Windrichtung durchgeführt wird.

10. Verfahren nach einem der vorhergehenden Ansprüche, bei dem das Steuern der Windenergieanlage das Einstellen der Rotordrehzahl oder/ und des Blattanstellwinkels des mindestens einen Rotorblatts (1, 2, 3) entsprechend der zu erwartenden Schallemission umfasst.

11. Verfahren nach einem der vorhergehenden Ansprüche, bei dem das Steuern der Windenergieanlage zum Reduzieren der Schallemission davon abhängig ist, ob die zu erwartende Schallemission einen Schwellwert für die Schallemission übersteigt.

12. Verfahren nach dem vorhergehenden Anspruch, bei dem der Schwellwert für die Schallemission von der Tageszeit oder/ und dem Wochentag abhängig ist.

13. Computerlesbares Speichermedium, das Programmcode umfasst, der, wenn er in einer Steuerung einer Windenergieanlage oder eines Windparks ausgeführt wird, das Verfahren nach einem der vorhergehenden Ansprüche durchführt.

14. Windenergieanlage mit mindestens einem Rotorblatt (1, 2, 3) und einer Steuereinheit, die so ausgelegt ist, dass sie das Verfahren nach einem der Ansprüche 1 bis 12 durchführt.

## Revendications

1. Procédé de contrôle d'émission de bruit d'une éolienne comprenant au moins une pale (1, 2, 3) de rotor, le procédé comprenant :
la fourniture de données de cisaillement de vent comprenant des valeurs de cisaillement de vent comme une fonction d'une hauteur au-dessus du sol ;
la détermination d'une émission de bruit attendue sur la base des données de cisaillement de vent ; et
le contrôle de l'éolienne pour réduire l'émission de bruit de l'éolienne en fonction de l'émission de bruit attendue, **caractérisé en ce que** le procédé comprend en outre la mesure d'une charge de pale de l'au moins une pale (1, 2, 3) de rotor comme une fonction de l'azimut de l'au moins une pale (1, 2, 3) de rotor, dans lequel les données de cisaillement de vent fournies sont déterminées sur la base de la charge de pale mesurée.

2. Procédé selon la revendication précédente, dans lequel l'émission de bruit attendue est déterminée en fonction de l'azimut de l'au moins une pale (1, 2, 3) de rotor et dans lequel le contrôle de l'éolienne pour réduire une émission de bruit de l'éolienne est exécuté en fonction de l'émission de bruit attendue et de l'azimut de l'au moins une pale (1, 2, 3) de rotor.

3. Procédé selon l'une des revendications précédentes, comprenant en outre la mesure d'au moins un paramètre environnemental et dans lequel les données de cisaillement de vent sont déterminées en fonction du paramètre environnemental mesuré.

4. Procédé selon la revendication précédente, dans lequel la mesure du paramètre environnemental comprend la mesure d'au moins une d'une température, d'une vitesse de vent, d'une direction de vent, d'une pression atmosphérique, d'une intensité de rayonnement solaire et d'une humidité d'air.

5. Procédé selon la revendication précédente, dans lequel la mesure du paramètre environnemental comprend la mesure à une pluralité de hauteurs entre le niveau du sol et une hauteur maximum de l'éolienne.

6. Procédé selon l'une des revendications précédentes, comprenant en outre la détermination d'une vitesse de vent et d'une sortie réelle de puissance de l'éolienne et la comparaison de la sortie réelle de puissance avec une sortie de puissance attendue pour la vitesse de vent déterminée, dans lequel les données de cisaillement de vent fournies sont en outre déterminées sur la base d'un résultat de la comparaison de la sortie réelle de puissance et de la sortie de puissance attendue.

7. Procédé selon la revendication précédente et selon une des revendications 3 à 5, dans lequel une de la sortie réelle de puissance ou de la sortie de puissance attendue est compensée en fonction du paramètre environnemental mesuré avant la comparaison de la sortie réelle de puissance à la sortie de puissance attendue.

8. Procédé selon l'une des revendications précédentes, comprenant en outre la détermination d'au moins un d'une heure du jour et d'un jour de la semaine, dans lequel le contrôle de l'éolienne pour réduire une émission de bruit de l'éolienne est exécuté en fonction de l'heure du jour et/ou du jour de la semaine déterminés.

9. Procédé selon l'une des revendications précédentes, comprenant en outre la détermination d'une direction de vent, dans lequel le contrôle de l'éolienne pour réduire une émission de bruit de l'éolienne est exécuté en outre en fonction de la direction de vent déterminée.

10. Procédé selon l'une des revendications précédentes, dans lequel le contrôle de l'éolienne comprend le réglage d'au moins un d'une vitesse de rotor et d'un pas de pale de l'au moins une pale (1, 2, 3) de rotor en fonction de l'émission de bruit attendue.

11. Procédé selon l'une des revendications précédentes, dans lequel le contrôle de l'éolienne pour réduire une émission de bruit est conditionnel à l'émission de bruit attendue étant supérieure à une émission de bruit de seuil.

12. Procédé selon la revendication précédente, dans lequel l'émission de bruit de seuil est une fonction d'au moins un de l'heure du jour et du jour de la semaine.

13. Support de stockage lisible par ordinateur comprenant un code de programme qui, lorsqu'il est exécuté sur un contrôleur d'une éolienne ou d'un parc éolien, met en oeuvre le procédé selon l'une des revendications précédentes.

14. Éolienne comprenant au moins une pale (1, 2, 3) de rotor et une unité de contrôle adaptée à mettre en oeuvre le procédé selon l'une des revendications 1 à 12.
